(19) Europäisches Patentamt
European Patent Office
Office européen des brevets

(11) **EP 2 187 339 A1**

(12) **EUROPEAN PATENT APPLICATION**

(43) Date of publication:
**19.05.2010   Bulletin 2010/20**

(51) Int Cl.:
***G06K 9/00*** *(2006.01)*      ***G06K 9/62*** *(2006.01)*

(21) Application number: **08380315.5**

(22) Date of filing: **12.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Fundación Robotiker**
**48170 Zamudio (Vizcaya) (ES)**

(72) Inventors:
• **Picon Ruiz, Artzai**
**48170 Zamudio (Vizcaya) (ES)**

• **Ghita, Ovidiu**
**48170 Zamudio (Vizcaya) (ES)**
• **Whelan, Paul F.**
**48170 Zamudio (Vizcaya) (ES)**
• **Iriondo, Pedro Maria**
**48170 Zamudio (Vizcaya) (ES)**

(74) Representative: **Carpintero Lopez, Francisco et al**
**Herrero & Asociados, S.L.**
**Alcalá 35**
**28014 Madrid (ES)**

(54)     **Method for integrating spectral and spatial features for classifying materials**

(57)     The proposed methodology allows integrating spectral and spatial features contained in any type of vector image I(x,y) and, specifically, in hyperspectral images. To that end a methodology is described which makes it possible to integrate said features in a single vector, an aggregate histogram vector $\hat{H}_{(x, y)}$ which can be calculated for the neighborhood of any point P(x,y) of the vector image and/or different regions, by means of using fuzzy spatial histograms which are generated from quantifying the spectral feature vectors. This invention has its field of application in processing hyperspectral images, among other fields. Specifically, a methodology is described which allows classifying materials in hyperspectral images by means of using these histograms and reclassifying wrongly classified regions.

**Description**

Technical Field of the Invention

The invention which is described has its field of application in processing hyperspectral images corresponding to electromagnetic radiations emitted/absorbed by a given substance, which can be applied for classifying materials or elements, for example, for discriminating certain metals in waste recycling.

Background of the Invention

There currently exist different techniques for obtaining hyperspectral images, such as for example optical spectrographs which allow, by means of using the physical diffraction phenomenon, obtaining the spectrum of each point of a line of the target image which is captured. This line is refracted upon passing through a diffraction grating or prism with an angle in function of its wavelength and the dispersed ray is detected as a line on the vertical Z axis of a chamber recording the intensity in the different wavelengths $\lambda$ for each point of the previous line, each point being represented on the horizontal X axis of the chamber.

By means of translation of the point of the object to be captured, hyperspectral images characterised by a three-dimensional cube can be obtained, containing in the plane formed by the X and Y axes spatial information about the position of the point and in each of the elements of the Z axis the information associated to the wavelength $\lambda$. These images contain information which is not seen with the naked human eye, and each spatial point thereof is defined by the electromagnetic spectrum associated thereto. This not only gives information about the aspect of these images in the different wavelengths (cutting plane at a Z axis value) which can even be invisible, but also gives information about the different absorption bands and the aspect of the spectrum associated to each point (cutting line upon fixing the X and Y axes). The information contained in this hyperspectral image is enormous, especially for a high number of bands, requiring high capacity and high processing speed equipment and efficient algorithms for processing the data which it contains.

By selecting a specific point in the plane defined by the XY axes, the electromagnetic spectrum associated to that point is given by the set of values contained in the Z axis associated to each of the wavelengths of the spectrum. Viewed mathematically, an electromagnetic spectrum can be defined by means of a feature vector ($L_n$) the elements of which are each of the emission or absorption values of each of the wavelengths, expressed as

$$\mathbf{L} = \left\{ L\left(\lambda_1\right), L\left(\lambda_2\right), ..., L\left(\lambda_K\right) \right\}^T \quad \text{(equation 1)}$$

In equation 1, K is the total number of wavelengths ($\lambda_1, \lambda_2, ..., \lambda_K$) contained in the image and $L(\lambda_i)$ denotes the intensity value of the element i, i = 1, 2,..., N of the normalised feature vector (L); i.e., $L(\lambda_i)$ is the intensity corresponding to the wavelength $\lambda_i$ associated to the selected point in the hyperspectral image which gives the spectrum.

For the purpose of reducing the influence of the geometry of the element object of classification by means of its spectral features, reducing the reflectance of the material of that element and the position of the light source of the element, the feature vector (L) is normalised with its mean. A normalised feature vector ($L_n$) is thus defined, according to equation 2, maintaining the shape features of the hyperspectral image at the same time as it achieves independence from the effects of the light used.

$$\mathbf{L}_n = \frac{\hat{\mathbf{L}}}{\sum_{i=1}^{K} \hat{L}(\lambda_i)} \quad \text{(equation 2)}$$

In equation 2, K is the number total of wavelengths of the hyperspectral image and $\hat{\mathbf{L}} = \dfrac{\mathbf{L} - \mathbf{B}}{\mathbf{W} - \mathbf{B}}$, wherein W and B are the vectors representing the white and black colour references respectively in that image ["Separating reflection components based on chromaticity and noise analysis", T. Tan, K. Nishino, and K. Ikeuchi, IEEE Transactions on Pattern Analysis and Machine Intelligence, vol. 26, no. 10, pp. 1373-1379, 2004].

If an automatic classifier algorithm for classifying the substance or element that this electromagnetic spectrum represents is to be created, the large amount of redundant data contained in the hyperspectral image causes several problems:

- The complexity of the classifier is exponentially increased in relation to the number of discriminant variables (each of the wavelengths of the spectrum).
- A much larger number of examples is required to train the classifier algorithm.
- The processing speed is lower with a larger number of data.

A example of a technique which is applied to extract discriminant spectral features of the material, element or substance to be classified at the same time as the number of discriminant variables, and therefore the previous problems, is reduced, is that of the Principal Components Analysis (PCA) ["Independent component analysis-based dimensionality reduction with applications in hyperspectral image analysis", J. Wang, and C.I. Chang, IEEE Transactions on Geoscience and Remote Sensing, vol. 44, no. 6, pp. 1586-1600, 2006].

The PCA technique allows decorrelating the information contained in the spectral bands by means of an orthogonal decomposition of the hyperspectral image, carrying out vector transformation by means of a matrix (V) formed by the first M<K eigenvectors $\{\hat{\mathbf{u}}_1, \hat{\mathbf{u}}_2, \hat{\mathbf{u}}_3,...\hat{\mathbf{u}}_M\}$ calculated from the covariance matrix of the normalised vectors which are used as training data:

$$\mathbf{L}_T = \mathbf{V}'(\mathbf{L}_n - \overline{\mathbf{L}}_n) = [\hat{\mathbf{u}}_1, \hat{\mathbf{u}}_2, \hat{\mathbf{u}}_3,...\hat{\mathbf{u}}_M]^{\mathrm{T}} \cdot (\mathbf{L}_n - \overline{\mathbf{L}}_n) \qquad \text{(equation 3)}$$

In equation 3, $L_n$ is the normalised feature vector on which the transformation is made, $\overline{L}_n$ is the mean vector of all the normalised vectors which are used in training the PCA algorithm and V is the transformation eigenmatrix. With this transformation, the spectrum is represented by the vectors $L_T$ in an orthogonal space, which represents a decorrelated and compressed version of the original hyperspectral information.

However, the PCA technique has some limitations:

- The compressed feature vectors X are not easily interpretable because they are not directly associated with specific physical variables of the element/material under analysis.
- It requires a training process involving a sampling of the relevant points from among the high input data dimension.
- If new materials are added in the classification process, the PCA decorrelation algorithm of the spectrum needs to be re-trained.

In addition, the extraction of features which allow defining only the spectral properties of the materials is not enough in some applications, because of the fact that even if two elements can have similar spectral features (colour), it does not mean that the same visual perception thereof is experienced. It is possible to observe similar colour elements, such as for example a piece of tree bark and an object made of clay, but to perceive that they are different because it is seen that the distribution of those colours has a different pattern in both objects. This spatial distribution of the different chromatic tonalities of an element is what is known as texture. Thus, in another example such as in discriminating metal materials, in which spectral decorrelation techniques such as PCA can be used, different levels of oxidation and several light conditions are obtained which cause noise or uncertainty in classifying the metals, since sampled pixels of hyperspectral images of one and the same material rarely have the same intensity levels, which can cause errors in discriminating these pixels as if they were different materials. The discriminatory power of the spatial distribution makes it appropriate to include this information in the model of the material to increase the discriminatory power compared to the different materials.

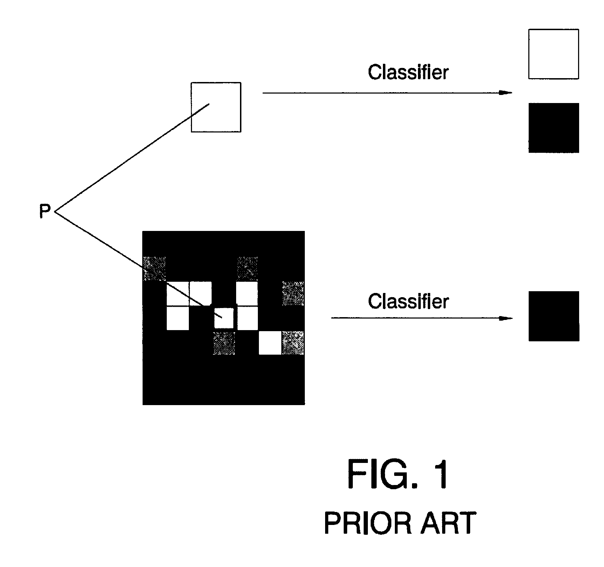

In view of Figure 1, assume that an element associated to a pixel P has to be classified as belonging to a light element or a dark one. To more accurately characterise the class to which the central pixel P belongs, the statistical distribution of the spectral features of a set of pixels spatially near P can be observed, but it is impossible to accurately classify by means of using the value of the features defining a single pixel. However, by means of the analysis of the statistical distribution of the nearby points, shown in Figure 1, it can be inferred that the element to which they belong is predominantly dark and a more accurate characterisation thereof can be made.

One of the known ways of including information about the statistical distribution of the neighborhood of a point is by means of using histograms. A histogram represents the frequency with which the studied variable is found within each of the defined intervals, offering an idea of the statistical distribution that this variable follows in the sample. Each of the intervals of the histogram stores the number of times that the value of a variable of the sampled space has fallen within that interval. The histogram thus calculated is a reflection of the probability density function that the analysed variable follows and, therefore, the variables defining this histogram are in turn a reflection of said probability function.

The variable to be represented in a histogram must first be quantified in a certain number of intervals according to a certain way. In most cases, for each element of the sampled space, the range of values to which it belongs is determined and said range is divided into equally-spaced intervals.

However, this way of quantifying the variables generates discontinuities at the borders of each of the intervals of the histogram. The elements which are located at those limits can jump from one range to another, varying the shape of the histogram due to small fluctuations caused by noise. Furthermore, this quantification does not reliably reflect the grade of membership of the variable to each of the ranges.

The invention which is described below overcomes the previous limitations and allows merging spatial information within any spectrum model, using the statistical distribution of a group of points within a spatial region which covers each of the features modelling the spectra in said points, and quantifying those features based on adapting the concept of fuzzy sets defined by Zadeh in the formulation of his fuzzy logic theory ["Fuzzy sets", L.A. Zadeh, Information and Control, vol. 8, pp. 338-353, 1965].

Description of the Invention

The present invention relates to a methodology for integrating in a spectral model descriptor both spatial and spectral information defining each element of a spectral image. To that end, the use of spatial histograms which allow capturing the existing variability, collected by the statistical distribution of each of the extracted spectral features, in a specific spatial region of the image, is proposed. It is generally applied to treat any type of multivariate or vector image and, more particularly, to treat hyperspectral images.

In spectral images, this integration in a single feature vector (spectrum descriptor) of the spectral and spatial features creates a spectrum model which allows classifying different elements or materials using the spatial and spectral discriminant factors together.

Spectral features are understood to be any type of discriminatory features contained in a pixel of a generic vector image and not limited only to the discriminant features related with the light spectrum.

The proposed discriminant features, integrating spectrum-spatial information in a single feature vector modelling the spectrum achieve an increase in the separability of the different materials/elements represented in the spectral image (classifiable by different intervals of the defined spatial histograms). And furthermore, by virtue of this increase in the separability between overlapping classes (which have border areas of uncertainty), the building of material/element classifiers is considerably simplified allowing modelling elements made up of several materials the presence of which is reflected in the histogram without affecting it.

For the purpose of modelling the spatial properties from among the discriminant features (variables to be analysed) of the materials/elements, the present methodology proposes using fuzzy spatial histograms in which, rather than carrying out a classic quantification of the variable in intervals to which it is associated with an absolute belongning, the variable is discretized and quantified into fuzzy sets.

The present methodology uses as starting information that of a two-dimensional vector image, i.e., it is applied for any image in which each pixel or point P (x, y) is defined by a feature vector I(x,y). In the specific case of hyperspectral images, for this vector I, any feature vector ($L_T$) representative of the spectrum can be used as vector representation of each point of the image I(x,y).

$$\mathbf{I}(x, y) = \mathbf{L}_T(x, y)$$

The starting vector image I(x,y) contains values of a variable $X_j$ in each of its pixels P (x,y) (in the case of hyperspectral images, $X_j$ denotes each of the components of the discriminant feature vector $L_T$ extracted from the original spectral vector L); j = 1,..., M, wherein M is the number of discriminant features), the value of $X_i$ being defined by I(x,y) for a point P(x, y) of the image.

A set of elements represented by a feature $X_j$ is considered, which feature is a component of the feature vector $L_T$ modelling the spectral image of said set of elements. The feature $X_i$ is a continuous variable taking values in an interval [0, C], the high values representing a higher intensity and the low values at lower intensity thereof. By analogy with the images represented in grey tones, the high values of the variable $X_i$ are represented with light tonalities and the low values with dark tonalities. To generate the spatial histogram, this feature $X_i$ is discretized by means of dividing the range [0, C] into several intervals.

For each scalar component $X_i$ of the feature vector, a fuzzy histogram is calculated and a histogram membership function $HMf_{ij}(x_j)$ is defined, where i = 1,..., N, wherein N is the number of intervals of the histogram. The membership function $HMf_{ij}(x_j)$ can be generalised such that the membership or belongings to each of the intervals into which the histogram is divided are not defined by the all or nothing of classic discretization, but rather it implements fuzzy discretization, for example, defining triangular functions $Hf_{ij}(x_j)$ expressed according to equation 4:

$$HMf_{ij}(x_j) = \begin{cases} 1 - 2\left|\dfrac{X_j - X_{j_{c_i}}}{D_j}\right|, & X_{j_{c_i}} - \dfrac{D_j}{2} < X_j < X_{j_{c_i}} + \dfrac{D_j}{2} \\ 0, & \text{Rest} \end{cases} \quad \text{(equation 4)}$$

In equation 4, $X_{jc_i}$ and $D_j$ are respectively the central value and the separation of each of the intervals into which the variable $X_j$ is quantified, I being the total number of intervals.

The histogram membership functions $HMf_{ij}(x_j)$, which can be represented by any generic mathematical function, associate to each value of the feature Xi a certain grade of membership to each of the intervals of the histogram. In the case of triangular membership functions, the membership of a certain value of the variable $X_i$ is not exclusive of single interval, but rather the value of membership is distributed among several intervals of one and the same histogram (fuzzy histogram). Thus, each element of the sampled space contributes to each of the intervals of the histogram according to its membership function, generating a better estimation of the associated density function and overcoming the limitations of classic quantification.

An effective way of quantifying the variable $X_i$ for the calculation of the fuzzy histogram is the representation thereof by a quantification vector $Q_{Xj}(x,y)$, for a point P(x,y). This vector has the same number of components as the N number of groups into which the feature (number of intervals of the histogram) has been divided. Each component of this vector $Q_{Xj}(x,y)$ is defined by the value of the membership function $HMf_{ij}(x_j)$ in each interval of the histogram. And a vector $Q_{Xj}(x,y)$ is obtained for each of the M variables $X_i$ existing in the image I(x,y), as expressed in equation 5:

$$\mathbf{Q}_{X_j}(x,y) = \left[HMf_1(X_j), HMf_2(X_j),..., HMf_N(X_j)\right] \quad \text{(equation 5)}$$

Applying in equation 5 the definition of the membership functions, for example that given by equation 4, the quantification vector associated to the fuzzy sets into which the component $X_j$ of the feature vector has been quantified can be obtained. A certain value of the feature $X_j$ is thus quantified by a vector $Q_{Xj}(x,y)$, determined by the values of the membership functions in the N fuzzy sets.

Taking each of the M quantification vectors $Q_{Xj}(x,y)$, an aggregate quantification vector $\mathbf{Q}(x,y)$ can be created containing the quantifications of all the variables defined in the image $\mathbf{I}(x,y)$ represented as a single vector:

$$\mathbf{Q}(x,y) = \left[\mathbf{Q}_{X_1}(x,y), \mathbf{Q}_{X_2}(x,y),..., \mathbf{Q}_{X_M}(x,y)\right] \quad \text{(equation 6)}$$

The dimensions of the vector of equation 6 are [M · N, 1], M being the number of components of the feature vector modelling the spectral image $\mathbf{I}(x,y)$ and N the number of intervals into which the fuzzy histogram has been discretized.

From the quantification vector $Q_{xi}$ defined in equation (5), fuzzy neighborhood histograms and fuzzy region histograms can be defined (extending the same concept of histogram in a neighborhood of a point for any region of the sampled space), as detailed below. Both types are vector histograms which serve to model the spatial properties of the discriminant features of the materials/elements.

A neighborhood centred in a point P(x,y) with previously determined dimensions [A, B], [A=Wide, B=High] is defined. As previously stated, the use of large sized neighborhoods includes a better estimation of the spatial distribution of the variable. In contrast, they require a greater calculation time at the same time as they increase the possibility that said neighborhood contains more than one class of material.

With the representation used for the quantification vector $Q_{xi}$, the histogram for the neighborhood $\mathbf{H}_{Xj}(X,Y)$ associated to a point P(x,y) for feature $X_i$ is calculated directly by means of adding up each of the quantification vectors of the variable $X_i$ associated to each of the points $(x,y) \in [A, B]$, belonging to the neighborhood of P(x,y) determined by the limits A and B, as defined in equation 7:

$$\mathbf{H}_{X_j}(X,Y) = \sum_{x=X-A}^{X+A}\sum_{y=Y-B}^{Y+B}\mathbf{Q}_{X_j}(x,y) \qquad \text{(equation 7)}$$

In equation 7, $\mathbf{H}_{X_j}(X,Y)$ is a vector representing the degree of presence of the different intensities which the variable $X_j$ can take in the neighborhood of point P(x,y).

The above definition for estimating the probability density function of a variable in a neighborhood of a point can be generalised to any region of the image to calculate a fuzzy region histogram, which collects the spatial information about the variable within a specific region of the image. A region R of an image is defined as a set of points belonging to the image, normally connected to one another, representing a specific area thereof. In a manner similar to the calculation of the histogram for a neighborhood, the histogram $\mathbf{H}_{X_j}(X,Y)$ of the variable $X_j$ is calculated from the quantification vector $Q_{xj}$ of the variable $X_j$ for a region R of the image I(x,y) by means of adding up the quantification vector of the variable $X_j$ for each of the points $(x,y) \in R$ belonging to said region:

$$\mathbf{H}_{X_j}(X,Y) \equiv \mathbf{H}_{X_j}(\Re) = \sum_{\Delta x,y \in \Re}\mathbf{Q}_{X_j}(x,y) \qquad \text{(equation 8)}$$

Both the definition of neighborhood histogram (equation 7) and the definition of region histogram (equation 8) represent the estimated probability function of the values which the variable $X_j$ can have in the associated area of the image. This fuzzy histogram vector $\mathbf{H}_{X_j}(X,Y)$ directly indicates the variability of the variable $X_j$ in the studied area, so it can be used directly as a feature vector which allows including the spatial variability of the feature $X_j$.

To finally obtain a real estimation of the probability function of the intensities of each of the features $X_j$, j = 1,...M, having quantified those variables separately and obtaining for each of them separately the respective neighborhood and/or specific region histograms, the sum of each of the components of the vector $\mathbf{H}_{X_j}(X,Y)$ defining the histogram for the variable $X_j$ must be one. Therefore, a normalised histogram $\hat{\mathbf{H}}_{X_j}(x,y)$ is defined for each of the previously described types of fuzzy histograms and is obtained by dividing the vector $\mathbf{H}_{X_j}(X,Y)$ by its associated unit norm $\|\mathbf{H}_{X_j}(x,y)\|_1$ or similar process, as expressed by equation 9:

$$\hat{\mathbf{H}}_{X_j}(x,y) = \frac{\mathbf{H}_{X_j}(x,y)}{\left\|\mathbf{H}_{X_j}(x,y)\right\|_1} \qquad \text{(equation 9)}$$

Wherein in equation 9:

$$\left\|\mathbf{H}_{X_j}(x,y)\right\|_1 = \sum_{\forall i}\left|\mathbf{H}_{X_j}(x,y)(i)\right|$$

Each of the vectors $\hat{\mathbf{H}}_{X_j}(x,y)$ represents the spatial variability of the feature $X_j$ which they represent in the selected area (neighborhood or region) of the image. These vectors can be clustered into a single vector representing the spatial variability of all the components of the feature vector modelling the vector image I(x,y) together. M normalised and independent fuzzy histograms are thus calculated for each pixel and are all concatenated in a single vector associated to that pixel or point P(x,y) and is herein called aggregate histogram vector $\hat{\mathbf{H}}(x,y)$, i.e.,

$$\hat{\mathbf{H}}(x,y) = \left[\hat{\mathbf{H}}_1(x,y),\hat{\mathbf{H}}_2(x,y),...,\hat{\mathbf{H}}_M(x,y)\right] \qquad \text{(equation 10)}$$

The aggregate histogram vector $\hat{\mathbf{H}}(x,y)$ integrates in itself information about the spatial variability of each of the variables $X_j$ simultaneously, thus characterising in a single vector the spectral and spatial properties of the image in a neighborhood or certain area. This vector $\hat{\mathbf{H}}(x,y)$ contains the information about spatial distribution for all the spectral feature vectors corresponding to the chosen areas of the image. The spectral features of the materials/elements represented in those areas of the image are captured in the form of the histogram defined by the vector $\hat{\mathbf{H}}(x,y)$.

A variation of the previous methodology consists of using the aggregate quantification vector $\mathbf{Q}(x,y)$ to directly calculate the aggregate histogram $\hat{\mathbf{H}}(x,y)$ integrating the spectral and spatial features. This variation has a great advantage, given that it simplifies and optimises the computational cost of the calculation of this histogram, even allowing its calculation incrementally, and its ease of implementation. Equations 12 and 13 detail the simplicity of calculating the aggregate neighborhood and region histograms, respectively:

$$\hat{\mathbf{H}}(x, y) = \sum_{i=x-A}^{x+A} \sum_{i=y-B}^{y+B} \mathbf{Q}(i, j) \qquad \text{(equation 12)}$$

$$\hat{\mathbf{H}}(\mathfrak{R}_i) = \sum_{\Delta(i,j)\in\mathfrak{R}} \mathbf{Q}(i,j) \qquad \text{(equation 13)}$$

The spectral and spatial features forming the components of the aggregate histogram vector $\hat{\mathbf{H}}(x,y)$ can be entered as input in a material classification algorithm. An applicable example is the multivariate Gaussian classifier, in which a Gaussian function of mean vector $\mu$ and covariance matrix $\Sigma$ is used for modelling each class of material, which model which can be given by the following expression:

$$\mathrm{N}(\hat{\mathbf{H}}\big|\mu, \Sigma) = \frac{1}{(2\cdot\pi)^{D/2}} \frac{1}{|\Sigma|^{1/2}} e^{\left\{-\frac{1}{2}(\hat{\mathbf{H}}\big|-\mu)^T \Sigma^{-1}(\hat{\mathbf{H}}\big|-\mu)\right\}} \quad \text{(equation 14)}$$

wherein D is the dimensionality of the aggregate histogram vector $\hat{\mathbf{H}}(x,y)$

The classifier compares each aggregate histogram vector $\hat{\mathbf{H}}(x,y)$ calculated for each pixel of the image with the normalised distributions modelling each class of material.

For the purpose of reducing classification errors, since in most cases the regions which are mistakenly classified are small but are connected with larger correctly classified regions, fuzzy histograms are calculated for regions of the image with different sizes. Then the classifier compares the calculated and normalised vector histograms (taking into account the number of intervals of each histogram and the number of elements forming the distribution) with the Gaussian models associated to each class of material (normally stored in a database). For each histogram checked, the classifier assigns a label corresponding to a class of material, according to the Gaussian model of the class minimising a coincidence cost function, which is defined according to equation 15 detailed below.

Given two regions, a and b, for which the respective fuzzy region histograms ($H_a$, $H_b$) are calculated, and region ab connecting the two previous ones, to which histogram $H_{ab}$ corresponds, the material classifier can assign to the three normalised histograms, $H_a$, $H_b$ and $H_{ab}$, the same class label and, therefore, the regions are merged. Another case is that the histograms of the connected regions a and b, $H_a$ and $H_b$, receive through the classifier different class labels. In such a case, the probability that each region corresponds to the assigned class of material is calculated to decide if the regions a and b merge or not. The probability of belonging of an aggregate histogram $H_r$ to a specific class (material) $C_i$ is defined by the probability of belonging to the Gaussian model of said class:

$$P(H_r \in C_i) = \mathrm{N}(\hat{\mathbf{H}}_i\big|\mu_i, \Sigma_i) \qquad \text{(equation 15)}$$

The classifier compares the probability of maintenance of the two regions a and b separately (equation 16) with the probability of merging of both in the connection region ab (r = ab in equation 15, giving rise to equation 17):

$$P(H_a \in C_a, H_b \in C_b) = P(H_a \in C_a) \cdot \frac{N_a}{N_{ab}} + P(H_b \in C_b) \cdot \frac{N_b}{N_{ab}} \qquad \text{(equation 16)}$$

$$P(H_{ab} \in C_{ab}) = \mathrm{N}(\hat{\mathbf{H}}_{ab}\, \boldsymbol{\mu}_{ab}, \Sigma_{ab}) \text{ (equation 17)}$$

In equation 16, the number of elements of each region, $N_a$, $N_b$ and $N_{ab}$ respectively, weights the contribution of each region when calculating its probability of merging. Regions a and b merge if the probability of maintenance of the two regions a and b separately(i.e., the estimation of the probability that the two regions a and b do not want to be joined to each other, which is the result of equation 16 and, weighting it by an empirical cost factor $\mu$' with a value greater than one, represents the cost of merging) is less than or equal to the probability of merging of both in the connection region ab (result of equation 17), as expressed in equation 18:

$$P(H_a \in C_a, H_b \in C_b) \cdot \mu' \le P(H_{ab} \in C_{ab}) \qquad \text{(equation 18)}$$

The material classifier can have two steps, such that in a first step the fuzzy normalised neighborhood histograms are entered, calculated in the neighborhoods of the points determining an initial partition of the image to classify the materials captured therein. A second step of the classifier refines that initial partition, carrying out a statistical re-classification with the fuzzy normalised histograms calculated for different regions of different sizes and calculating the probabilities of merging of the regions.

The described methodology allows generating an integrated spatial-spectral model, given by a single vector, which includes/is combined with the spectral information captured in the starting image information about the spatial variability thereof within an area of the image more or less near (neighborhood or region) the analysed pixels. The invention is valid for any type of multivariate image, in which each point thereof is defined by a vector, regardless of the origin thereof. Therefore, the proposed methodology can be applied directly to spectral images, images in which the feature vector defines the texture thereof, or any other type of combination or representation of data/features which can be represented as vectors, including the case of discriminant features extracted from hyperspectral images.

Under the integrated spatial-spectral model created, each point of the vector image is defined not only by its spectral features, but also by the spectrum-spatial histogram defined in the actual neighborhood of the point, increasing the information describing said point.

Under the integrated spatial-spectral model created, each region of the vector image is defined by the spectrum-spatial histogram defined in the actual region increasing the information describing the same.

Fuzzy quantification of the spatial histograms allows a better representation thereof, preventing abrupt changes in the shape of the histogram generated by the noise and the variability inherent in the capturing and values near the border points.

Furthermore, another advantage which is achieved by applying this methodology in a material classifier is that the combination of the spectral and spatial features in a single vector allows a better separability of overlapping classes of materials since, by means of studying the spatial and spectral properties of the neighborhood or region, more information about the statistical distribution which the discriminant variables follow is obtained.

Therefore one aspect of the invention is a method for integrating spectral and spatial features of vector images, and particularly for classifying materials from spectral images (including the case of hyperspectral images).

More specifically, the method for integrating spectral and spatial features which is proposed, applicable in classifying materials, comprises the following steps:

-    Extracting or acquiring a vector image $\mathbf{I}(x,y)$ of two-dimensional points which is defined for each point P(x,y) by means of a spectral feature vector made up of M variables $X_j(x,y)$, j= 1,..., M.

-    Quantifying each variable $X_j(x,y)$ by means of a quantification vector $Q_{Xj}(x,y)$ of N components, N being the number of groups into which the variable is quantified, which is calculated as:

$$\mathbf{Q}_{X_j}(x,y) = \left\lfloor HMf_1(X_j), HMf_2(X_j),..., HMf_N(X_j) \right\rfloor$$

wherein the N components $HMf_1(X_j)$, $HMf_2(X_j)$, ..., $HMf_N(X_j)$ are histogram membership functions associating to each variable $X_j(x,y)$ a grade of belonging to one of N intervals respectively of a fuzzy spatial histogram.

- Selecting for each point P(x,y) at least one set of points belonging to at least one area of the vector image I(x,y), which can correspond to the neighborhood of the point P(x,y) or to another region of connected points.
- Calculating for each selected area of the vector image $\mathbf{I}(x,y)$ M spatial histograms of N intervals, which are used to generate an aggregate histogram vector $\hat{\mathbf{H}}(x,y)$. This calculation of the M spatial histograms can be made in two ways:

  - According to a first way of calculation, the following steps are followed:

    - generating a fuzzy histogram vector $\mathbf{H}_{X_j}(X,Y)$, for each variable $X_j(x,y)$, calculating each fuzzy histogram vector $\mathbf{H}_{X_j}(X,Y)$ (as expressed in equations 7-8), by means of adding up the quantification vectors generated for each of the points belonging to the selected area of the vector image $\mathbf{I}(x,y)$;
    - normalising the fuzzy histogram vectors corresponding to the M variables $X_j(x,y)$, obtaining M independent normalised histogram vectors $\hat{\mathbf{H}}_1(x,y)$, $\hat{\mathbf{H}}_2(x,y)$,..., $\hat{\mathbf{H}}_M(x,y)$ for each point P(x,y);
    - concatenating the M normalised histogram vectors $\hat{\mathbf{H}}_1(x,y)$, $\hat{\mathbf{H}}_2(x,y)$,..., $\hat{\mathbf{H}}_M(x,y)$ to generate the aggregate histogram vector $\hat{\mathbf{H}}(x,y)$ which is expressed as:

$$\hat{\mathbf{H}}(x,y) = \left[\hat{\mathbf{H}}_1(x,y),\hat{\mathbf{H}}_2(x,y),...,\hat{\mathbf{H}}_M(x,y)\right]$$

  - According to a second way of calculation, more immediate than the first, the steps to follow are:

    - generating for each point P(x,y) an aggregate quantification vector $\mathbf{Q}(x,y)$ made up of the quantification vectors $Q_{xj}(x,y)$ of all the variables $X_j(x,y)$ of the vector image $\mathbf{I}(x,y)$, expressed as:

$$\mathbf{Q}(x,y) = \left[\mathbf{Q}_{X_1}(x,y),\mathbf{Q}_{X_2}(x,y),...,\mathbf{Q}_{X_M}(x,y)\right];$$

    - calculating the aggregate histogram vector $\hat{\mathbf{H}}(x,y)$ of each point P(x,y) of the selected area of the vector image $\mathbf{I}(x,y)$ directly from the aggregate quantification vector Q (as expressed in equations 12-13) ;

- Once the aggregate histogram vector $\hat{\mathbf{H}}(x,y)$ has been calculated in one of the two previous ways, the last step of the method for integrating spectral and spatial features of vector images consists of: Assigning the aggregate histogram vector $\hat{\mathbf{H}}(x,y)$ to the spectral and spatial features contained in the point P(x,y), $\hat{\mathbf{H}}(x,y)$ forming an integrated spectral-spatial model of the vector image $\mathbf{I}(x,y)$.

The described method for integrating spectral and spatial features can be used in a method for classifying materials using a classes of material modelling function, for example, a multivariate Gaussian, by:

- assigning the aggregate histogram vector $\hat{\mathbf{H}}(x,y)$ to a class of material label,
- comparing the aggregate histogram vector $\hat{\mathbf{H}}(x,y)$ with the classes of material modelling function value for the class of material label assigned to said aggregate histogram vector $\hat{\mathbf{H}}(x,y)$.

A method for reclassifying regions of a vector image $\mathbf{I}(x,y)$ is also defined, which method uses the described method for integrating spectral and spatial features to refine the previous method for classifying materials comprising:

- calculating the aggregate histogram vector $\hat{\mathbf{H}}(x,y)$ for each region defined in the vector image $\mathbf{I}(x,y)$;
- assigning the aggregate histogram vector $\hat{\mathbf{H}}(x,y)$ of each region to a class of material label corresponding to a classes of material modelling function value, for example a Gaussian of mean vector $\mu$ and covariance matrix $\Sigma$ such as that defined in equation 14;
- for each region which can be connected to another region, calculating a probability of merging and calculating a cost associated to the merging of the connected regions, applying the previously described equations 15, 16 and 17 in case of using the modelling function of equation 14;
- if the probability of merging of the regions is greater than the cost associated to the merging of the connected regions, according to equation 18, assigning one and the same class of material label to the respective aggregate histogram vectors $\hat{\mathbf{H}}(x,y)$ of the connected regions.

Description of the Drawings

To complement the description being made and for the purpose of aiding to better understand the features of the invention according to a preferred practical embodiment thereof, a set of drawings is attached as an integral part of this description in which the following has been depicted with an illustrative and non-limiting character:

Figure 1 shows a graphic depiction of the use of the spatial distribution of features for a classifier in the current state of the art, representing at the top the use of the single element of the pixel and at the bottom the use of the features of the elements of the neighborhood of the pixel.

Figure 2 shows a graphic depiction, on the left, of the pixels of a vector image and, on the right, of the vector function depicting that image and forming a feature vector the components of which correspond to the value of a spectral feature associated to each pixel.

Figure 3 shows, from left to right, a graphic depiction of the pixels of a vector image, the triangular membership functions of the histogram and the components of the quantification aggregate vector, according to an embodiment of the invention.

Figure 4 shows a graphic depiction of the calculation of the fuzzy histogram, according to an embodiment of the invention, for a neighborhood with a size of three pixels wide and three high.

Figure 5 shows a graphic depiction, at the tope, of different types of distribution of the feature of the spectral image and, at the bottom, of the associated fuzzy neighborhood histograms.

Figure 6 shows a graphic depiction of the aggregate histogram vectors for different distributions of the spectral features of the spectral image.

Figure 7 shows a graphic depiction of different regions of the vectorial image and the associated fuzzy histogram region vectors.

Figure 8 shows a graphic depiction of the merging of regions and the associated fuzzy histogram region vectors.

Preferred Embodiments of the Invention

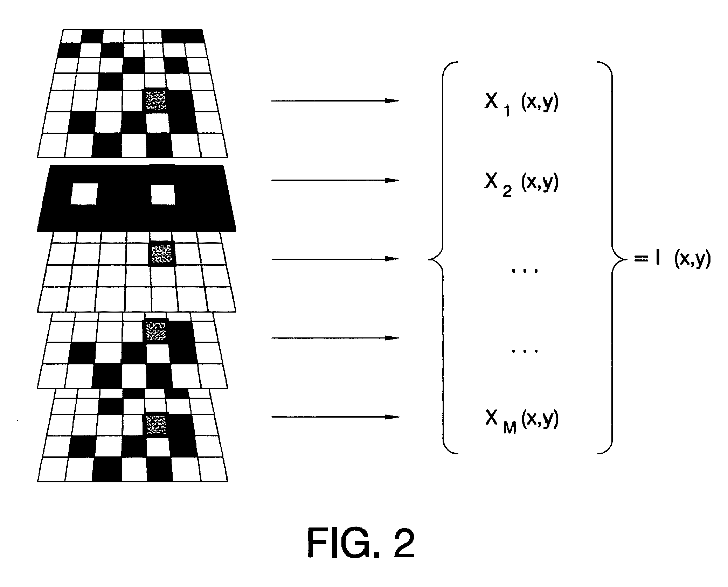

In a possible practical implementation of the invention, with special application for discriminating materials, the first step is capturing a spectral image of the elements to be distinguished. It begins from a two-dimensional vector image I(x,y), shown in Figure 2, containing elements to which, for a point having co-ordinates x and y, the values of a variable $X_j$ (x,y) forming a spectral feature of the elements of the vector image I(x,y) are associated.

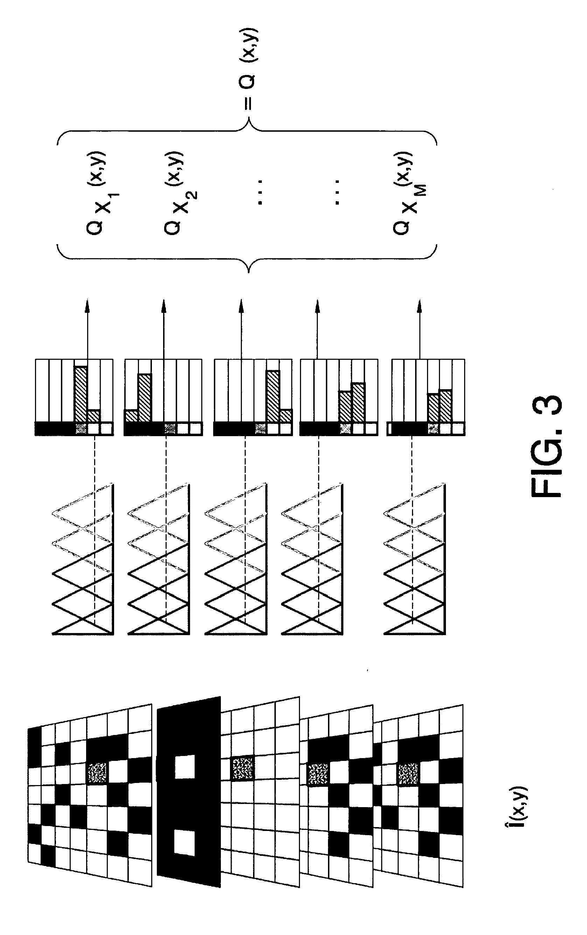

A following step consists of normalising the input data, filtering the spectrum and normalising the illumination of the observed elements, to then proceed to spectral decorrelation, which also involves normalising the spectrum. To that end, each of the components of the vector **I**(x,y) is normalised to be able to work more easily with a normalised image vector **Î**(x,y). The components of the image vector used are quantified in a series of fuzzy sets, it being possible to use the same triangular membership functions, determining the intensity of each component, and obtaining an aggregate quantification vector **Q**(x,y), as shown in Figure 3.

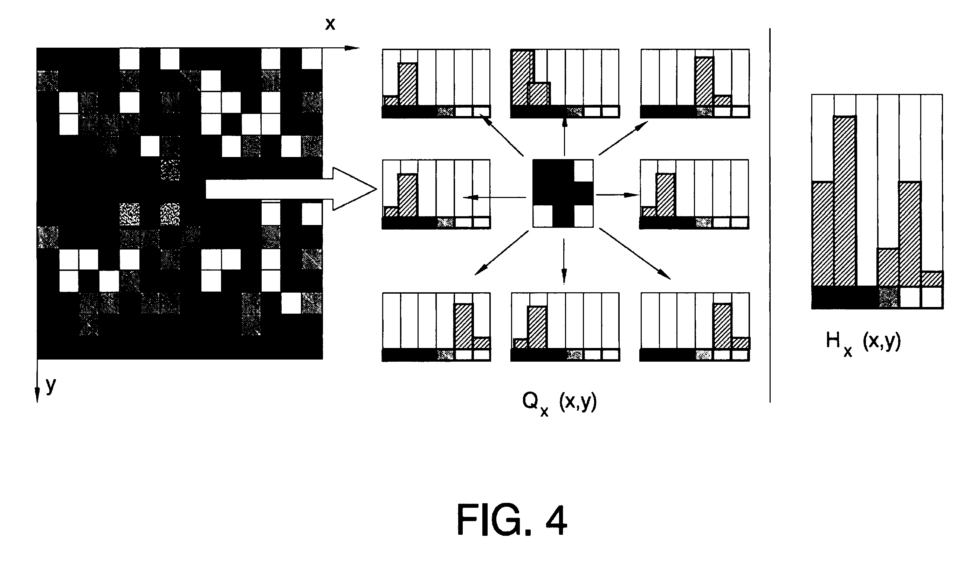

The representation used for the quantification vector $Q_x$ simplifies the calculation of the fuzzy spatial histogram $H_{X_j}(X, Y)$ for a neighborhood associated to a point, for example sized 3x3 as illustrated in Figure 4, by directly adding up the quantification vectors for each of the points present in the neighborhood.

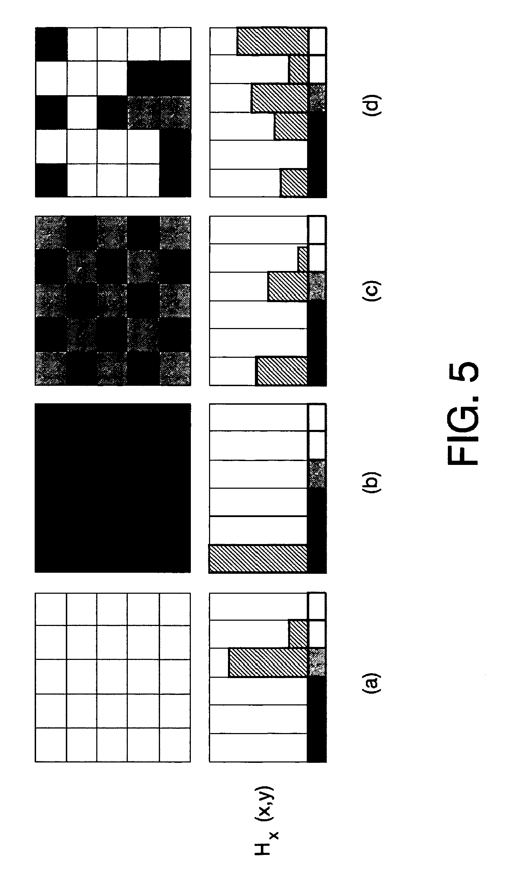

This definition of fuzzy spatial histogram $H_{X_j}(X, Y)$ represents the estimated probability function of the values which variable Xi can have in the neighborhood or surroundings to which it is associated. These values can be used directly as feature vectors which can capture therein information about the spatial variability of the variable. Thus, in the example of Figure 5, in which a distribution of the values of the constant light variable Xi (a), constant dark distribution (b), chequered distribution (c) and variable distribution (d) is depicted from left to right, if only the colour information is used, it is impossible to correctly classify the elements of the image due to the fact that half of the points will belong to the constant light distribution (a) and half will be dark points belonging to the constant dark distribution (b). However, the use of the definition of the fuzzy spatial histogram $H_{X_j}(X, Y)$ as a feature vector includes the spatial distribution of the elements and allows using the spatial variability in discriminating the elements, whereby in Figure 5 the four types of distributions can be clearly differentiated by means of using the spatial features.

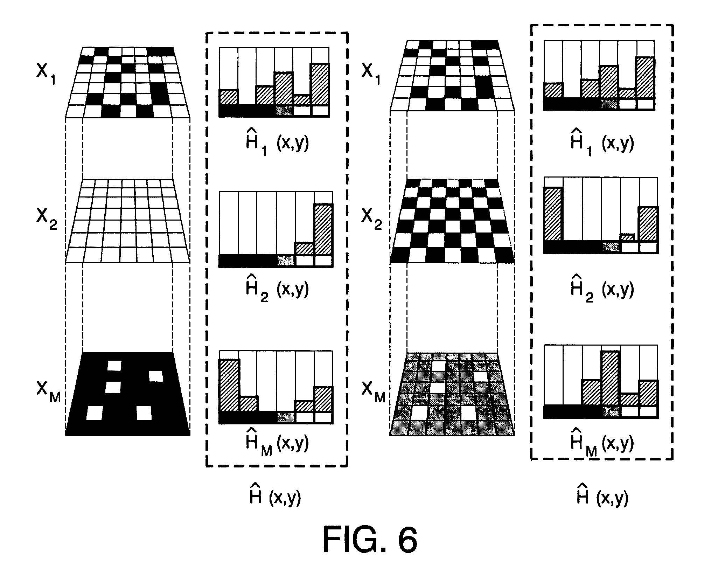

The aggregate fuzzy spatial histogram **Ĥ**(x,y) is calculated using each of the previously obtained fuzzy spatial histograms as detailed in Figure 6 and which represents, in an integrated way, the spectral and spatial properties of point P(x, y).

The same aggregate fuzzy spatial histogram **Ĥ**(x,y) can be obtained using the aggregate quantification vector Q directly, rather than making the calculations by adding up the quantification vectors $Q_x$ of each variable $X_j$ separately and then normalising the results for the M variables (i = 1,..., M).

By means of the resulting aggregate fuzzy spatial histogram **Ĥ**(x,y), the mathematical models which allow carrying out a first classification of the different materials associated to each point are generated.

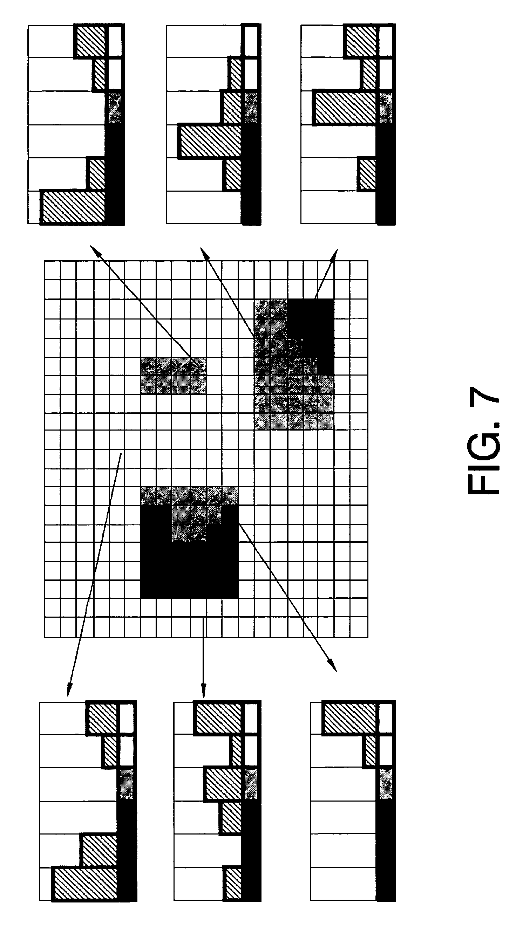

To refine this classification and taking the regions classified in the previous point as a basis, the region histograms $\mathbf{H}(\mathfrak{R}_i)$ are generated for each of these regions as depicted in Figure 7.

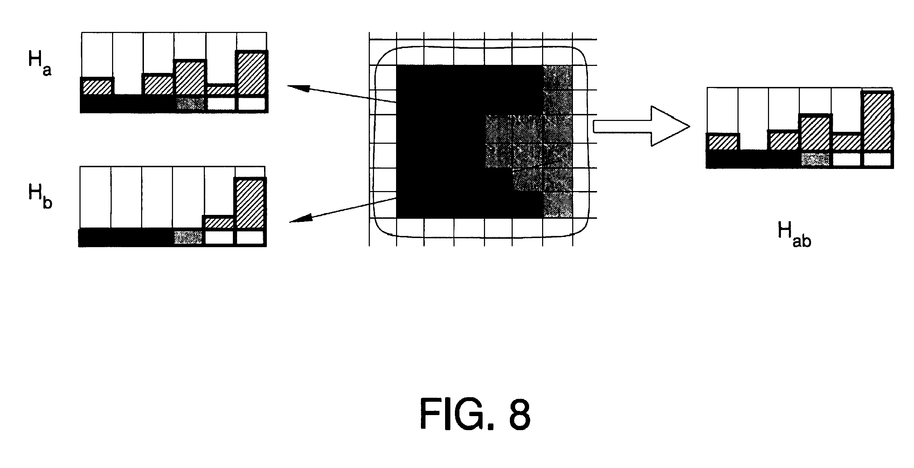

By means of using the calculated region histograms, the regions are reclassified, as illustrated in Figure 8, by means of calculating the reclassification and merging cost according to equations 16 and 17.

In this text, the word "comprise" and its variants (such as "comprising", etc.) must not be interpreted exclusively, i.e., they do not exclude the possibility that what is described includes other elements, steps, etc.

## Claims

1. Method for integrating spectral and spatial features, comprising:

   - extracting a vector image $\mathbf{I}(x,y)$ of two-dimensional points which is defined for each point P(x,y) by means of a spectral feature vector made up of M variables $X_j(x,y)$, j= 1,..., M, the values of which correspond to the spectral features in point P(x,y);
   - quantifying the spectral feature vector;
   **characterised in that** the step of quantifying the spectral feature vector comprises:
   - quantifying each variable $X_j(x,y)$ by means of a quantification vector $Q_{Xj}(x,y)$ of N components, which is calculated as:

   $$\mathbf{Q}_{X_j}(x,y) = \left[ HMf_1(X_j), HMf_2(X_j),..., HMf_N(X_j) \right]$$

   wherein the N components $HMf_1(X_j)$, $HMf_2(X_j)$,..., $HMf_N(X_j)$ are histogram membership functions associating each variable $X_j(x,y)$ with a grade of membership to one of N intervals respectively of a fuzzy spatial histogram;
   - selecting for each point P(x,y) at least one set of points belonging to at least one area of the vector image $\mathbf{I}(x,y)$;
   - calculating for the at least one selected area of the vector image $\mathbf{I}(x,y)$ an aggregate histogram vector $\hat{\mathbf{H}}(x,y)$ made up of M fuzzy spatial histograms $\hat{\mathbf{H}}_1(x,y)$, $\hat{\mathbf{H}}_2(x,y)$,.., $\hat{\mathbf{H}}_M(x,y)$ and which is expressed as:

   $$\hat{\mathbf{H}}(x,y) = \left[ \hat{\mathbf{H}}_1(x,y), \hat{\mathbf{H}}_2(x,y),..., \hat{\mathbf{H}}_M(x,y) \right];$$

   - assigning the aggregate histogram vector $\hat{\mathbf{H}}(x,y)$ to the spectral and spatial features of the vector image $\mathbf{I}(x, y)$ for point P(x,y).

2. Method according to claim 1, **characterised in that** the step of calculating the aggregate histogram vector $\hat{\mathbf{H}}(x,y)$ for the at least one selected area of the vector image $\mathbf{I}(x,y)$ comprises:

   - generating for each point P(x,y) of the selected area of the vector image $\mathbf{I}(x,y)$ an aggregate quantification vector $\mathbf{Q}(x,y)$ made up of the quantification vectors $Q_{Xj}(x,y)$ of all the variables $X_j(x,y)$ of the vector image $\mathbf{I}(x, y)$, expressed as:

   $$\mathbf{Q}(x,y) = \left[ \mathbf{Q}_{X_1}(x,y), \mathbf{Q}_{X_2}(x,y),..., \mathbf{Q}_{X_M}(x,y) \right]$$

3. Method according to claim 2, **characterised in that** the aggregate histogram vector $\hat{\mathbf{H}}(x,y)$ is calculated for the at least one selected area of the vector image $\mathbf{I}(x,y)$ which is a neighborhood of point P(X,Y), with a width A and a height B, formed by the set of points (x,y) wherein X-A $\leq$ x $\leq$ X+A, Y-B $\leq$ y $\leq$ Y+B, by means of the expression:

$$\hat{\mathbf{H}}(x, y) = \sum_{i=x-A}^{x+A} \sum_{i=y-B}^{y+B} \mathbf{Q}(i, j)$$

4. Method according to any of claims 2-3, **characterised in that** the aggregate histogram vector $\overset{\wedge}{\mathsf{H}}(x,y)$ is calculated for the at least one selected area of the vector image $\mathbf{I}(x,y)$ which is a region R formed by connected points (x,y) by means of the expression:

$$\hat{\mathbf{H}}(x, y) = \sum_{\Delta(i,j)\in\Re} \mathbf{Q}(i,j)$$

5. Method according to claim 1, **characterised in that** the step of calculating the aggregate histogram vector $\overset{\wedge}{\mathsf{H}}(x,y)$ for the at least one selected area of the vector image $\mathbf{I}(x,y)$ comprises:

- generating for each variable $X_j(x,y)$ and for each selected area of the vector image $\mathbf{I}(x,y)$ a fuzzy histogram vector $\mathbf{H}_{X_j}(X,Y)$ of N intervals, which is calculated by adding up the quantification vectors generated for each of the points belonging to the selected area of the vector image $\mathbf{I}(x,y)$;
- normalising the fuzzy spatial histograms corresponding to the M variables $X_j(x,y)$ obtaining M independent normalised histogram vectors $\overset{\wedge}{\mathbf{H}}_1(x,y)$, $\overset{\wedge}{\mathbf{H}}_2(x, y)$,..., $\overset{\wedge}{\mathbf{H}}_M(x,y)$ for each point P(x,y);
- concatenating the M normalised histogram vectors $\mathbf{H}_1(x,y)$, $\mathbf{H}_2(x,y)$,..., $\overset{\wedge}{\mathbf{H}}_M(x,y)$ to obtain the aggregate histogram vector $\mathbf{H}(x,y)$. expressed as:

$$\hat{\mathbf{H}}(x, y) = \left[\hat{\mathbf{H}}_1(x,y), \hat{\mathbf{H}}_2(x,y),...,\hat{\mathbf{H}}_M(x,y)\right]$$

6. Method according to claim 5, **characterised in that** the fuzzy histogram vector $\mathbf{H}_{X_j}(X,Y)$, is generated for the at least one selected area of the vector image $\mathbf{I}(x,y)$ which is a neighborhood of point P(X,Y), with a width A and a height B, formed by the set of points (x,y) wherein X-A ≤ x ≤ X+A, Y-B ≤ y ≤ Y+B, calculating:

$$\mathbf{H}_{X_j}(X,Y) = \sum_{x=X-A}^{X+A} \sum_{y=Y-B}^{Y+B} \mathbf{Q}_{X_j}(x,y)$$

7. Method according to any of claims 5-6, **characterised in that** the fuzzy histogram vector $\mathbf{H}_{X_j}(X,Y)$, is generated for the at least one selected area of the vector image $\mathbf{I}(x,y)$ which is a region R formed by connected points (x,y), calculating :

$$\mathbf{H}_{X_j}(X,Y) = \sum_{\Delta x,y\in\Re} \mathbf{Q}_{X_j}(x,y)$$

8. Method according to any of the previous claims, **characterised in that** the histogram membership functions are triangular and are calculated as:

$$HMf_{ij}(x_j) = \begin{cases} 1 - 2\left|\dfrac{X_j - X_{j c_i}}{D_j}\right|, & X_{j c_i} - \dfrac{D_j}{2} < X_j < X_{j c_i} + \dfrac{D_j}{2} \\ 0, & \text{Rest} \end{cases}$$

where j = 1,..., M; i= 1,..., N;

a central value $X_{jC_i}(x,y) > X_j(x,y)$;
a separation value $D_j$ between intervals of the fuzzy spatial histogram for the variable $X_j(x,y)$.

9. A method for classifying materials using the method for integrating spectral and spatial features defined according to any of the previous claims and a classes of material modelling function, the method for classifying materials comprises:

    - assigning the aggregate histogram vector $\hat{H}(x,y)$ to a class of material label,
    - comparing the aggregate histogram vector $\hat{H}(x,y)$ with the classes of material modelling function value for the class of material label assigned to said aggregate histogram vector $\hat{H}(x,y)$.

10. Method for classifying materials according to claim 9, **characterised in that** the classes of material modelling function is multivariate Gaussian.

11. Method for reclassifying materials based on regions of a vector image $I(x,y)$, using the method for integrating spectral and spatial features defined according to any of claims 1-8, comprising:

    - calculating the aggregate histogram vector $\hat{H}(x,y)$ for each region defined in the vector image $I(x,y)$
    - assigning the aggregate histogram vector $\hat{H}(x,y)$ of each region to a class of material label corresponding to a classes of material modelling function value,
    - for each region which can merge with another region, calculating a probability of merging and calculating a cost associated to the merging of the regions,
    - if the probability of merging of the regions is greater than the cost associated to the merging of the regions, assigning one and the same class of material label to the respective aggregate histogram vectors $\hat{H}(x,y)$ of the regions.

12. Method for reclassifying materials according to claim 11, **characterised in that** the classes of material modelling function is a Gaussian function $N(\hat{H}|\mu, \Sigma)$ of mean vector $\mu$ and covariance matrix $\Sigma$, defined as

$$N(\hat{\mathbf{H}}|\boldsymbol{\mu},\Sigma) = \frac{1}{(2\cdot\pi)^{D/2}}\frac{1}{|\Sigma|^{1/2}}e^{\left\{-\frac{1}{2}(\hat{\mathbf{H}}|-\boldsymbol{\mu})^T\Sigma^{-1}(\hat{\mathbf{H}}|-\boldsymbol{\mu})\right\}},$$

wherein D is the dimensionality of the aggregate histogram vector $\hat{H}(x,y)$.

13. Method for reclassifying materials according to claim 12, **characterised in that** the cost associated to the merging of two regions a and b into one region ab is calculated by multiplying a probability of maintenance of the two regions a and b separately by an empirical cost factor calculated as

$$P(H_a \in C_a, H_b \in C_b) = P(H_a \in C_a)\cdot\frac{N_a}{N_{ab}} + P(H_b \in C_b)\cdot\frac{N_b}{N_{ab}}$$

wherein $N_a$, $N_b$ and $N_{ab}$ is the number of elements contained in regions a, b and ab respectively, where

$$P(H_a \in C_a) = N(\hat{\mathbf{H}}_a|\boldsymbol{\mu}_a,\Sigma_a) \text{ and } P(H_b \in C_b) = N(\hat{\mathbf{H}}_b|\boldsymbol{\mu}_b,\Sigma_b),$$

and **characterised in that** the probability of merging of the regions into region ab is calculated as

$$P(H_{ab} \in C_{ab}) = N(\hat{\mathbf{H}}_{ab}|\boldsymbol{\mu}_{ab},\Sigma_{ab})$$

FIG. 1

PRIOR ART

EP 2 187 339 A1

$$X_1 (x,y)$$

$$X_2 (x,y)$$

$$\vdots \quad \vdots$$

$$X_M (x,y)$$

$$= I (x,y)$$

FIG. 2

FIG. 3

$Q_x (x,y)$

$H_x (x,y)$

FIG. 4

$H_x(x,y)$

(a)             (b)             (c)             (d)

FIG. 5

FIG. 6

FIG. 7

FIG. 8

Europäisches
Patentamt

European
Patent Office

Office européen
des brevets

# EUROPEAN SEARCH REPORT

**Application Number**

EP 08 38 0315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID LANDGREBE: "Hyperspectral Image Data Analysis" IEEE SIGNAL PROCESSING MAGAZINE, IEEE SERVICE CENTER, PISCATAWAY, NJ, US, vol. 19, no. 1, 1 January 2002 (2002-01-01), pages 17-28, XP011093743 ISSN: 1053-5888 * the whole document * | 1-13 | INV.<br>G06K9/00<br>G06K9/62 |
| X | & KETTIG R L ET AL: "Classification of Multispectral Image Data by Extraction and Classification of Homogeneous Objects" IEEE TRANSACTIONS ON GEOSCIENCE ELECTRONICS, IEEE, US, vol. 11, no. 1, 1 January 1976 (1976-01-01), pages 19-26, XP011158689 ISSN: 0018-9413 Sections 2 and 3 | 1-13 | |
| X | DAVID A. LANDGREBE: "Signal Theory Methods in Multispectral Remote Sensing" 2003, WILEY , XP002534671 Chapter 3 Chapter 8 | 1-13 | **TECHNICAL FIELDS SEARCHED (IPC)**<br><br>G06K |
| A | CHEN C H ET AL: "Statistical pattern recognition in remote sensing" PATTERN RECOGNITION, ELSEVIER, GB, vol. 41, no. 9, 1 September 2008 (2008-09-01), pages 2731-2741, XP022700968 ISSN: 0031-3203 [retrieved on 2008-05-04] Sections 2 to 5 | 1-13 | |

-/--

The present search report has been drawn up for all claims

| Place of search | Date of completion of the search | Examiner |
|---|---|---|
| The Hague | 2 July 2009 | Alecu, Teodor Iulian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 08 38 0315

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GORTE B G H: "Improving spectral image classifications by incorporating context data using likelihood vectors" IMAGE PROCESSING AND ITS APPLICATIONS, 1995., FIFTH INTERNATIONAL CONF ERENCE ON EDINBURGH, UK, LONDON, UK,IEE, UK, 1 January 1995 (1995-01-01), pages 251-255, XP006528442 ISBN: 978-0-85296-642-6 * the whole document * ----- | 1-13 | |
| A | HE L ET AL: "Anomaly detection in hyperspectral imagery based on maximum entropy and nonparametric estimation" PATTERN RECOGNITION LETTERS, ELSEVIER, AMSTERDAM, NL, vol. 29, no. 9, 1 July 2008 (2008-07-01), pages 1392-1403, XP022663910 ISSN: 0167-8655 [retrieved on 2008-02-29] Sections 2 to 4 ----- | 1-13 | |
| A | BOYER K L ET AL: "Classifying Land Development in High-Resolution Satellite Imagery Using Hybrid Structural-Multispectral Features" IEEE TRANSACTIONS ON GEOSCIENCE AND REMOTE SENSING, IEEE SERVICE CENTER, PISCATAWAY, NJ, US, vol. 42, no. 12, 1 December 2004 (2004-12-01), pages 2840-2850, XP011123630 ISSN: 0196-2892 Sections IV and V ----- -/-- | 1-13 | **TECHNICAL FIELDS SEARCHED (IPC)** |

The present search report has been drawn up for all claims

| Place of search | Date of completion of the search | Examiner |
|---|---|---|
| The Hague | 2 July 2009 | Alecu, Teodor Iulian |

EPO FORM 1503 03.82 (P04C01)

**EUROPEAN SEARCH REPORT**

Application Number

EP 08 38 0315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PAWAN JAIN ET AL: "Wavelet based multiresolution histogram for fast image retrieval" IEEE TENCON 2003. CONFERENCE ON CONVERGENT TECHNOLOGIES FOR THE ASIA-PACIFIC REGION. BANGALORE, INDIA, OCT. 15 - 17, 2003; [IEEE REGION 10 ANNUAL CONFERENCE], NEW YORK, NY : IEEE, US, vol. 2, 15 October 2003 (2003-10-15), pages 581-585, XP010686985 ISBN: 978-0-7803-8162-9 Section 3 ----- | 1-13 | |

TECHNICAL FIELDS
SEARCHED    (IPC)

The present search report has been drawn up for all claims

| Place of search | Date of completion of the search | Examiner |
|---|---|---|
| The Hague | 2 July 2009 | Alecu, Teodor Iulian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
     document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. Tan ; K. Nishino ; K. Ikeuchi.** Separating reflection components based on chromaticity and noise analysis. *IEEE Transactions on Pattern Analysis and Machine Intelligence,* 2004, vol. 26 (10), 1373-1379

- **J. Wang ; C.I. Chang.** Independent component analysis-based dimensionality reduction with applications in hyperspectral image analysis. *IEEE Transactions on Geoscience and Remote Sensing,* 2006, vol. 44 (6), 1586-1600
- **L.A. Zadeh.** Fuzzy sets. *Information and Control,* 1965, vol. 8, 338-353